# EUROPÄISCHE PATENTANMELDUNG

(11) **EP 4 675 261 A1**
(43) Veröffentlichungstag der Anmeldung: **07.01.2026**
(21) Anmeldenummer: 24186642.5
(22) Anmeldetag: 04.07.2024
(51) Int. Cl.: G01N 21/84, G01N 19/04, G01B 11/06, G01B 11/30, G01N 21/88

(54) **VERFAHREN UND VORRICHTUNG FÜR EINE BRUCHFLÄCHENANALYSE**

(71) Anmelder: Schäfter + Kirchhoff GmbH, 22525 Hamburg (DE)
(72) Erfinder: Die Erfindernennung liegt noch nicht vor
(74) Vertreter: Hauck Patent- und Rechtsanwälte PartmbB

(57) **Zusammenfassung**

Vorrichtung und Verfahren zur Auswertung von Bruchflächen zweier Bruchpartner (14, 30) mit den Schritten: Bereitstellen eines Analysesystems, umfassend eine Messeinrichtung, aufweisend eine Bildaufnahmeeinrichtung (42, 44) mit einem insbesondere hinsichtlich optischer Schärfe einstellbaren Objektiv (28) zum sensorischen Erfassen einer ersten Bruchfläche eines ersten Bruchpartners und einer zugehörigen zweiten Bruchfläche eines zweiten Bruchpartners, wobei die Messeinrichtung ausgebildet und eingerichtet ist zum Bereitstellen sensorischer Informationen der erfassten Bruchflächen, einen Probenhalter zum Halten des ersten und/oder zweiten Bruchpartners, eine Beleuchtungseinrichtung (22) zur Beleuchtung der mit der Messeinrichtung zu erfassenden ersten und/oder zweiten Bruchfläche, eine Anzeigeeinrichtung zur visuellen Anzeige von mittels der Messeinrichtung bereitgestellter sensorischer Informationen, Anordnen des ersten und/oder zweiten Bruchpartners an dem Probenhalter, Durchführen einer optischen Erfassung, Anzeigen von mittels der Messeinrichtung bereitgestellter Informationen, Auswerten der sensorischen Informationen der erfassten ersten und zweiten Bruchfläche.

## Beschreibung

Die Erfindung betrifft ein Verfahren und ein Analysesystem zur Auswertung von Bruchflächen zweier Bruchpartner.

Die Auswertung von Bruchflächen spielt für verschiedene technischen Bereiche der Materialwissenschaften eine Rolle, um Verbindungsverfahren oder Verbindungsmittel wie das Kleben mit einem Klebstoffs hinsichtlich ihrer Wirkweise zu untersuchen. Dabei werden Bruchproben mit gleichen oder unterschiedliche Verbindungspartner untersucht. Bruchflächen, die durch das Brechen von miteinander verbundenen Materialien entstanden sind, bieten einen geeigneten Einblick in die Effektivität der verwendeten Verbindungsverfahren und Verbindungsmittel und lassen Rückschlüsse auf die Qualität der Verbindung zu. Die Auswertung kann wichtige Informationen über die Ursachen des Versagens einer Verbindung liefern.

Das erfindungsgemäße Verfahren nutzt eine Kombination aus bildgebenden Techniken, Oberflächenanalyse und computergestützter Bildverarbeitung, um detaillierte Informationen über die Bruchflächen zu extrahieren. Durch die Anwendung dieses Verfahrens können wichtige Erkenntnisse über die Qualität der Verbindung gewonnen, potenzielle Schwachstellen identifiziert und geeignete Maßnahmen zur Verbesserung von Materialien und Verbindungsprozessen abgeleitet werden.

Der Erfindung liegt die Aufgabe zugrunde ein einfach bedienbares Analysesystem und ein einfach durchführbares Verfahren zur Analyse von Bruchflächen bereitzustellen.

Die Aufgabe wird gelöst durch ein Verfahren nach Anspruch 1 sowie durch ein Analysesystem nach Anspruch 19. Vorteilhafte Ausgestaltungen sind in den Unteransprüchen angegeben.

Erfindungsgemäß ist ein Verfahren zur Auswertung von Bruchflächen zweier Bruchpartner mit den Schritten: Bereitstellen eines Analysesystems, umfassend eine Messeinrichtung, aufweisend eine Bildaufnahmeeinrichtung mit einem insbesondere hinsichtlich optischer Schärfe einstellbaren Objektiv zum sensorischen Erfassen einer ersten Bruchfläche eines ersten Bruchpartners und einer zugehörigen zweiten Bruchfläche eines zweiten Bruchpartners, wobei die Messeinrichtung ausgebildet und eingerichtet ist zum Bereitstellen sensorischer Informationen der erfassten Bruchflächen (14, 30), und wobei das sensorische Erfassen mindestens ein optisches Erfassen mittels einer Bildaufnahme und die sensorischen Informationen mindestens optische Informationen umfassen, einen Probenhalter (18) zum Halten des ersten und/oder zweiten Bruchpartners, eine Beleuchtungseinrichtung (22) zur Beleuchtung der mit der Messeinrichtung zu erfassenden ersten und/oder zweiten Bruchfläche, eine Anzeigeeinrichtung zur visuellen Anzeige von mittels der Messeinrichtung bereitgestellter sensorischer Informationen, Anordnen des ersten und/oder zweiten Bruchpartners an dem Probenhalter, Durchführen einer optischen Erfassung der ersten und/oder zweiten Bruchfläche des ersten und/oder zweiten Bruchpartners mittels der Messeinrichtung, Anzeigen von mittels der Messeinrichtung bereitgestellter Informationen der erfassten ersten und/oder zweiten Bruchfläche als ein oder mehrere für einen Benutzer auswertbare Bilder mittels der Anzeigeeinrichtung, Auswerten der sensorischen Informationen der erfassten ersten und zweiten Bruchfläche, wobei das Auswerten der sensorischen Informationen den Schritt umfasst: Identifizieren von zwischen der ersten und der zweiten Bruchfläche korrespondierender Bereiche.

Das erfindungsgemäße Verfahren wird vorzugsweise für die Analyse von Bruchpartnern eingesetzt, die nach einer Verbindung durch Kleben unter Einsatz einer Trennkraft voneinander getrennt werden. Beim Kleben wird die Adhäsion technisch genutzt. Wenn Teile geklebt werden, ist ein wichtiger Indikator für Bewertung der Verbindung, wann die Klebung versagt, also bei welcher Kraft die Fügestelle bricht. Dabei wird die Klebung so optimiert, dass die Fügestelle im Klebstoff bricht (also kohäsives Versagen) und nicht an der Grenzfläche (adhäsives Versagen). Bei der Bewertung werden daher die Flächenanteile bewertet, die "versagt" haben, also gebrochen sind. Ein Versagen des Klebstoffes ist also geplant, die Eigenschaften werden jedoch so gewählt, dass bei erst einer bestimmten Kraft der Bruch stattfindet.

Bei den erfindungsgemäßen Verfahren werden die Bruchflächen der zwei Bruchpartner mit einem bildgebenden Verfahren optisch erfasst. Dabei kann vorgesehen sein, dass die Bruchflächen gleichzeitig oder, wie vorzugsweise, nacheinander mit der Messeinrichtung erfasst werden. Bei der optischen Erfassung werden verschiedene optische und vorzugsweise auch topologische Informationen erfasst. Wobei die topologische Informationen Höheninformationen der Bruchflächen umfassen.

Die Bruchstellen der beiden Bruchpartner müssen derart erfassbar sein, dass korrespondierende Bereiche einander zugeordnet werden können. So kann eine gezielte und aussagekräftige Auswertung der beiden Bruchflächen im Verhältnis zueinander durchgeführt werden. Für eine Auswertung gleich mehrerer Bruchpartnerpaare kann vorgesehen sein, dass der Probenhalter derart ausgebildet und eingerichtet ist, dass mehr als einen Satz jeweils zweier zueinander gehöriger Bruchpartner gehaltert werden kann, beispielsweise kann vorgesehen sein, dass mit dem Probenhalter zwei bis zehn, vorzugsweise acht Sets mit jeweils zwei Bruchpartnern gehaltert werden kann.

Für die Analyse und die optische Auswertung der Bruchflächen ist denkbar, dass von der Messeinrichtung erfasster und bereitgestellter sensorischer Informationen der Bruchfläche auf einer Anzeigeeinrichtung, beispielsweise auf einem Bildschirm, angezeigt werden. Dabei kann insbesondere vorgesehen sein, dass die Informationen im Format einer 2x2 Bildermatrix angezeigt werden, wobei jeweils zwei der Bilder Informationen der Bruchfläche des ersten Bruchpartners und der Bruchfläche des zweiten Bruchpartners zeigen. Beispielsweise können die zwei Bilder einer Bruchfläche jeweils eine Bildaufnahme einerseits und eine visuelle Darstellung topologischer Informationen andererseits enthalten. Die Bild und Höheninformation können auch zusammen in einer 3D-Darstellung angezeigt werden. Die Annotierung erfolgt dann in den beiden korrespondierenden 3D- Bildern.

Das Analysesystem kann derart eingerichtet sein, dass dem Benutzer des Systems eine Bearbeitung der Bilder ermöglicht wird, vorzugsweise derart, dass der Benutzer wahlweise in einem, in einer Auswahl mehrerer oder in allen Bildern gleichzeitig Annotierungen oder andere Bearbeitungen vornehmen kann.

Für eine Justage des Systems kann vorgesehen sein, dass das Verfahren den Schritt umfasst: Durchführen eines Prüfablaufs, wobei der Prüfablauf folgende Schritte umfasst: Erfassen einer Helligkeit und/oder einer Schärfe in den mittels der Messeinrichtung bereitgestellten optischen Informationen und Auswerten der erfassten Helligkeit und/oder Schärfe, Verändern von Parametern der Beleuchtungseinrichtung bei Feststellen und in Abhängigkeit einer Abweichung der erfassten Helligkeit von einer vorgebbaren Helligkeit und/oder Verändern von Parametern der Messeinrichtung in Abhängigkeit einer Abweichung der erfassten Schärfe von einer vorgebbaren Schärfe, und vorzugsweise Wiederholen des Prüfablaufs bis die Abweichung von erfasster Helligkeit und/oder Schärfe gegenüber einer vorgebbaren Helligkeit und/oder Schärfe innerhalb eines vorgebbaren Schwellwertintervalls liegt.

Die Veränderung von Parametern der Beleuchtungseinrichtung kann händisch durch den Bediener des Analysesystems durchführbar sein. Denkbar ist auch, dass die Veränderung der Parameter der Beleuchtungseinrichtung von einer Steuerungseinrichtung automatisiert oder zumindest semiautomatisch, also durch den Bediener des Systems angeleitet durchführbar ist.

Für eine präzise Zuordnung verschiedener Bereiche der Bruchflächen zweier zueinander gehöriger Bruchpartner bzw. für die Unterstützung der Analyse der Bruchflächen kann vorgesehen sein, dass eine Messeinrichtung verwendet wird, die Höheninformationen erfasst. Die mit der Messeinrichtung erfassbaren Informationen umfassen vorzugsweise also auch topologische Informationen, mit denen eine Topologie der erfassten Bruchfläche erstellbar ist.

Die Bedienung des Analysesystems kann dadurch weiter erleichtert werden, dass das Analysesystem eine Stelleinrichtung zum Einstellen der Ausrichtung des ersten und/oder zweiten Bruchpartners relativ zur Messeinrichtung umfasst, und wobei das Verfahren den Schritt umfasst: Ausrichten des ersten und/oder zweiten Bruchpartners relativ zur Messeinrichtung mittels der Stelleinrichtung.

Es ist daran gedacht, dass die Bildaufnahmeeinrichtung ausgebildet und eingerichtet ist zur Aufnahme eines oder mehrerer Bilder der ersten und/oder zweiten Bruchfläche. Es kann dabei vorgesehen sein, dass die Bilder der ersten und zweiten Bruchfläche mittels der Messeinrichtung zeitlich nacheinander oder gleichzeitig erfassbar sind.

In einer Ausgestaltung des Analysesystems ist daran gedacht, dass eine Bildaufnahmeeinrichtung verwendet wird, die mindestens eine Zeilenkamera umfasst. Dabei kann insbesondere eine CCD-Farbzeilenkamera vorgesehen sein. Für eine hohe Bildauflösung kann vorgesehen sein, dass der Bildsensor der Kamera eine Pixelgröße von 3 µm bis 20 µm, vorzugsweise 10 µm bis 15 µm aufweist. Denkbar ist auch der Einsatz eine CMOS-Zeilenkamera. Bei einer CMOS-Kamera kann der Bildsensor beispielsweise eine Pixelgröße von 3,5 µm aufweisen. Alternativ ist auch denkbar, statt einer Zeilenkamera eine Flächenkamera einzusetzen.

In einer vorteilhaften Ausgestaltung ist vorgesehen, dass eine Bildaufnahmeeinrichtung verwendet wird, die eine Stereokamera umfasst, wobei die Stereokamera ausgebildet und eingerichtet ist, zwei Bilder jeweils einer Bruchfläche mit unterschiedlichen Betrachtungswinkeln aufzunehmen. Unter Verwendung einer Stereokamera lassen sich in einfacher Weise topologische Informationen mit dem Messsystem erfassen. Alternativ könnte eine andere Oberflächenabtastung, beispielsweise mittels Lasers oder mittels Schall, verwenden, um eine Höheninformation der Bruchflächen zu erfassen.

Für eine höhere Flexibilität bei der Ausleuchtung der Bruchflächen kann vorgesehen sein, dass eine Beleuchtungseinrichtung verwendet wird, die mindestens eine und bevorzugt mindestens zwei Leuchtmittelgruppen umfasst, wobei jede Leuchtmittelgruppe jeweils mindestens ein einstellbares Leuchtmittel umfasst, und wobei die Beleuchtungseinrichtung derart eingerichtet und ausgestaltet ist, dass die Leuchtmittel individuell und/oder gruppenweise hinsichtlich Helligkeit einstellbar sind. Mit einer individuellen Ansteuerbarkeit der Leuchtmittel können HDR-Aufnahmen unterstützt werden.

Vorzugsweise werden LED-Leuchtmittel für die Beleuchtungseinrichtung verwendet. Eine besonders hohe Flexibilität bei der Ausleuchtung der Bruchflächen wird erzielt, wenn die einzelnen Leuchtmittel jeweils separat ansteuerbar sind.

Zur Reduktion von Schlagschatten, die sonst bei einseitig ausgerichteter Ausleuchtung auftreten können, ist daran gedacht, dass eine Beleuchtungseinrichtung verwendet wird, bei der die Leuchtmittel der Art einer etwa sphärisch geformten Kuppel oder eines langgestreckten Tunnels in Bezug auf die mit der Messeinrichtung jeweils optisch zu erfassenden Bruchflächen angeordnet sind. Eine tunnelartige Beleuchtungseinrichtung, also eine im Querschnitt halbkreis- oder halbelliptisch-geformte Kontur, die sich entlang einer geraden Achse erstreckt, ist insbesondere von Vorteil, wenn eine Messeinrichtung mit einer Zeilenkamera verwendet wird. Dabei kann die Längsachse des Tunnels vorteilhafter Weise in gleicher Richtung bzw. parallel zur Längsachse der Zeilenkamera angeordnet sein. Die Kamera kann am Scheitelpunkt der Tunnelkuppe durch einen länglichen Schlitz in Richtung der Bruchpartner ausgerichtet sein. Eine kuppelartige Ausgestaltung der Beleuchtungseinrichtung mit etwa sphärischer Kontur oberhalb der Bruchpartner ist insbesondere bei Einsatz einer Messeinrichtung mit einer Flächenkamera von Vorteil.

Gemäß einer weiteren vorteilhaften Ausgestaltung kann vorgesehen sein, dass eine Beleuchtungseinrichtung verwendet wird, die eine Diffusoreinrichtung aufweist, wobei die Diffusoreinrichtung derart zwischen Leuchtmitteln und der mit der Beleuchtungseinrichtung beleuchteten ersten und/oder zweiten Bruchfläche angeordnet ist, dass das Licht dieser Leuchtmittel zur Beleuchtung der ersten und/oder zweiten Bruchfläche nicht gerichtet sondern gestreut ist. Gemäß dieser Ausgestaltung kann also vorgesehen sein, dass vor zumindest einigen der vorzugsweise als LED ausgeführten Leuchtmittel zusätzlich eine Diffusor-Folie, eine Diffusor-Platte, -Scheibe oder dergleichen platziert oder an den Leuchtmitteln befestigt ist, um das auf die Bruchflächen fallende Licht zu streuen. Die sensorisch zu erfassende Fläche wird dadurch stärker indirekt beleuchtet. Spiegelungen und Reflexe können damit reduziert werden.

Für eine besonders präzise Ausrichtung der Bruchpartner gegenüber der Messeinrichtung kann vorgesehen sein, dass eine Stelleinrichtung verwendet wird, die derart ausgebildet und eingerichtet ist, dass eine Einstellung der Position des Probenhalters gegenüber der Messeinrichtung in drei Raumrichtungen ermöglicht ist, wobei die Einstellung der Position des Probenhalters in mindestens eine Raumrichtung in einer Schrittweite von 0,5 µm bis 0,05 µm, vorzugsweise in einer Schritt weite von 0,1 µm ermöglicht ist, und wobei die Stelleinrichtung vorzugsweise einen motorisierten Antrieb aufweist. Mit der Stelleinrichtung kann der Abstand des Probenhalters zum optischen System eingestellt werden. Neben der Möglichkeit, den Probenhalter beweglich auszugestalten, ist alternativ oder zusätzlich denkbar, das Kamerasystem relativ zum Probenhalter beweglich auszugestalten.

Eine weitere Erhöhung der Präzision für die Ausrichtung der Bruchpartner gegenüber der Messeinrichtung kann vorgesehen sein, dass eine Stelleinrichtung verwendet wird, die derart eingerichtet und ausgebildet ist, dass die mit der Messeinrichtung zu erfassenden Bruchpartner bei einer relativen Veränderung der Position des Probenhalters mittels der Stelleinrichtung in eine erste Raumrichtung, insbesondere in Z-Richtung, über eine Distanz von 1 cm eine Abweichung gegenüber ihrer Startposition bezüglich der zwei übrigen Raumrichtungen, insbesondere bezüglich der X- und Y-Richtungen, von weniger als 20 µm aufweisen. In dieser Ausgestaltung ist die Stelleinrichtung vorzugsweise in der Art eines Hubtisches ausgeführt. Eine Stelleinrichtung dieser Art weist eine sehr hohe Genauigkeit bei der Höhenverstellung auf und bietet damit eine hohe Parallelität bei Höhenveränderung.

Für eine schnell und einfache Platzierung der Bruchpartner in dem Analysesystem kann vorgesehen sein, dass ein Probenhalter verwendet wird, der derart eingerichtet und ausgebildet ist, dass die Bruchpartner magnetisch an dem Probenhalter gehalten werden. Dabei kann vorgesehen sein, dass Magnetpartner sowohl an den Bruchpartnern als auch an dem Probenhalter befestigt sind. Denkbar ist, dass die Magnetpartner jeweils als Permanentmagnet oder als Permanentmagnet einerseits und ferromagnetisches Element andererseits ausgeführt sind. Alternativ oder zusätzlich kann vorgesehen sein, dass die Bruchpartner klemmend oder in anderer Art form- und/oder kraftschlüssig an dem Halter gehalten werden. In einer Weiterentwicklung kann auch vorgesehen sein, dass der Probenhalter und/oder die Bruchpartner Führungselemente aufweisen, um die Bruchpartner verdrehsicher und/oder positionsgenau an dem Probenhalter anordnen zu können. Damit kann die Wiederholgenauigkeit bei Positionierung erhöht werden.

Die Automatisierung der mit dem erfindungsgemäßen System durchführbaren Bruchflächenanalyse kann dadurch erhöht werden, wenn das Auswerten unter Einsatz eines selbstlernenden Algorithmus erfolgt, insbesondere eines Random Forrest Algorithmus.

Die Analyse der Bruchflächen kann dadurch erleichtert werden, dass das Auswerten der sensorischen Informationen den Schritt aufweist: Identifizieren und Markieren von Bereichen in den sensorischen Informationen, wobei die Bereiche nach vorgebbaren Kriterien identifiziert werden und wobei vorzugsweise die identifizierten und markierten Bereiche verwendet werden, um den Algorithmus zu trainieren. Die sensorischen Informationen sind dabei vorzugsweise mittels einer Anzeigevorrichtung visualisierte Darstellungen der mit der Messeinrichtung erfassten optischen bzw. topologischen Informationen der Bruchflächen. Das Identifizieren und/oder Markieren kann manuell und/oder automatisch durchführbar sein. Bei dem Markieren werden beispielsweise Konturrahmen um Bereiche von dem Benutzer erstellt, ergänzt oder von einem für die Steuerung des Analysesystems vorgesehenen computerimplementierten Steuerungsverfahren vorgegebenen Konturrahmen korrigiert. Derartige Konturrahmen sind vorzugsweise zusammenhängende Bildelemente (Pixel), die eine Kontur definieren bzw. eine Fläche umgrenzen. In gleicher Art können verschiedenen Bereichen in den visualisierten Informationen der Bruchflächen bestimmte von dem Benutzer und/oder von einem Steuerungsverfahren identifizierte Merkmale zugeordnet werden.

Insbesondere die Anzeige und Zuordnung der Bruchflächen in allen Bildern gleichzeitig erleichtert eine treffgenaue Klassifizierung. So lassen sich Flächen gleicher / korrespondierender Strukturen auch aus den unterschiedlichen Bildern erkennen und zuordnen und man erhält gleichzeitig eine Art Plausabilitätsprüfung. Hierbei ist insbesondere auch die topologische Ansicht wertvoll, da bestimmte Brucharten nur hier eindeutig zu identifizieren sind.

Identifiziert und Markiert werden beispielsweise optisch oder algorithmisch unterscheidbare Bereiche in den sensorischen Informationen der erfassten Bruchflächen. Das Markieren dient dabei einer Zuordnung von eindeutig identifizierten Merkmalen zu ausgewählten Bereichen. Merkmale können beispielsweise verschiedene Flächenanteile bei einem Belastungstest von Klebstoffen sein. Zu den zu analysierenden Flächenanteilen zählen beispielsweise Kohäsionsbruch = Bruch im Klebstoff (CF), Adhäsionsbruch = Klebstoff löst sich vom Material (AF), Fügeteilnaher Kohäsionsbruch (SCF), Benetzungsfehler, Faserauszug bei Faserverbundwerkstoffen. Weitere Klassifizierung von Brüchen lassen sich der EN ISO 10365:2022 entnehmen. Der Inhalt dieser Vorschrift wird für weitere Details zur Klassifizierung und Bewertung von Bruchflächen explizit referenziert und eingebunden.

Der Schritt des Auswertens ist insbesondere für die Verbesserung eines Algorithmus hilfreich, der den Benutzer bei der Erkennung bestimmter Merkmale in den sensorischen Informationen der erfassten Bruchflächen unterstützen soll. Das Identifizieren und Markieren von Bereichen gemäß dieser Ausgestaltung kann bei wiederholter Analyse, insbesondere bei sich ständig wiederholenden Brucharten, einmalig, wiederkehrend oder sporadisch durchgeführt werden, um die Erkennungsgenauigkeit eines verwendeten Algorithmus zu verbessern. Der Algorithmus kann somit trainiert werden, damit die Identifikation bestimmter Merkmale der Bruchflächen in den sensorischen Informationen stärker algorithmusbasiert, also unter geringerer Beteiligung eines Benutzers durchführbar sind.

Das Identifizieren und Markieren von Bereichen gemäß dieser Ausgestaltung kann automatisiert, teilautomatisiert unter Zuarbeit des Benutzers oder ständig manuell durch den Benutzer durchgeführt werden. Eine ständig manuelle Durchführung kann beispielsweise sinnvoll sein, wenn die untersuchten Proben ständig unterschiedlicher Art sind. Wenn also wenig Wiederholungen gleicher Proben untersucht werden.

Insbesondere sind für die Ausgestaltung in einem für Steuerung des Analysesystems vorgesehenen computerimplementierten Steuerungsverfahren Software-Hilfsmittel vorgesehen, die dem Benutzer die Annotierung bzw. Bearbeitung der mit der Messeinrichtung erfassten sensorischen Daten erleichtert. Dazu gehören einer oder mehr als einer der Verfahrensschritte Bereichsdefinition, Höheninformation, Ausrichten von Stempel und Substrat, Labeln in 2x2 Matrix, Labelhilfe, Auswertungen zur Bewertung der Güte, Zoom, Radieren, Rückgängig machen.

Gemäß einer Ausgestaltung ist vorgesehen, dass das Identifizieren von zwischen der ersten und der zweiten Bruchfläche korrespondierender Bereiche den Schritt aufweist: Auswerten von in den sensorischen Informationen enthaltenen Höheninformationen der erfassten Bruchflächen und Zuordnen von Höhenbereichen der ersten Bruchfläche zu korrelierenden Höhenbereichen der zweiten Bruchfläche.

Für eine erleichterte Benutzung des Verfahrens kann gemäß einer Ausgestaltung vorgesehen sein, dass das Verfahren den Schritt aufweist: Ausrichten der auf der Anzeigeeinrichtung angezeigten Bilder anhand von zwischen der ersten und der zweiten Bruchfläche korrespondierenden Bereichen, insbesondere anhand korrespondierender Höhenbereiche.

Für eine verbesserte statistische Auswertung der Analyseergebnisse kann vorgesehen sein, dass das Auswerten der optischen Informationen den Schritt aufweist: Bewerten von Flächen zuvor identifizierter Bereiche in den sensorischen Informationen hinsichtlich ihres Flächenanteils relativ zur Gesamtfläche der ersten und/oder zweiten Bruchfläche.

Für eine Bewertung der Analyse kann alternativ oder zusätzlich vorgesehen sein, dass das Auswerten der optischen Informationen den Schritt aufweist: Bewerten von Flächen zuvor identifizierter Bereiche in den sensorischen Informationen hinsichtlich der Sicherheit, mit der sie einem Merkmal zugeordnet wurden. Als ein Ergebnis der Analyse kann insbesondere vorgesehen sein, dass relative Flächenanteile weitere Kriterien erhalten, die sich auf die Bewertung des Gesamtergebnisses beziehen, vorzugsweise weiter hinsichtlich eines vorgebbaren Grenzwerts.

Erfindungsgemäß ist auch eine Steuerungseinrichtung (26), die ausgebildet und eingerichtet ist zur Steuerung eines Verfahrens nach einem der hier beschriebenen Ausgestaltungen.

Schließlich ist ein Analysesystem zur Auswertung von Bruchflächen erfindungsgemäß, das ausgebildet und eingerichtet ist, ein Verfahren nach einem der hier beschriebenen Ausgestaltungen auszuführen, wobei das Analysesystem die Vorrichtungsmerkmale eines oder mehrerer der hier beschriebenen Ausgestaltungen umfasst.

Die Erfindung wird im Folgenden anhand von Figuren näher erläutert. Es zeigen:
- Fig. 1: eine schematische Ansicht eines erfindungsgemäßen Analysesystems,
- Fig. 2: eine schematische Ansicht der Messeinrichtung im Verhältnis zu den zu analysierenden Bruchpartnern von der Seite,
- Fig. 3: eine schematische Ansicht der Messeinrichtung im Verhältnis zu den zu analysierenden Bruchpartnern von vorn, und

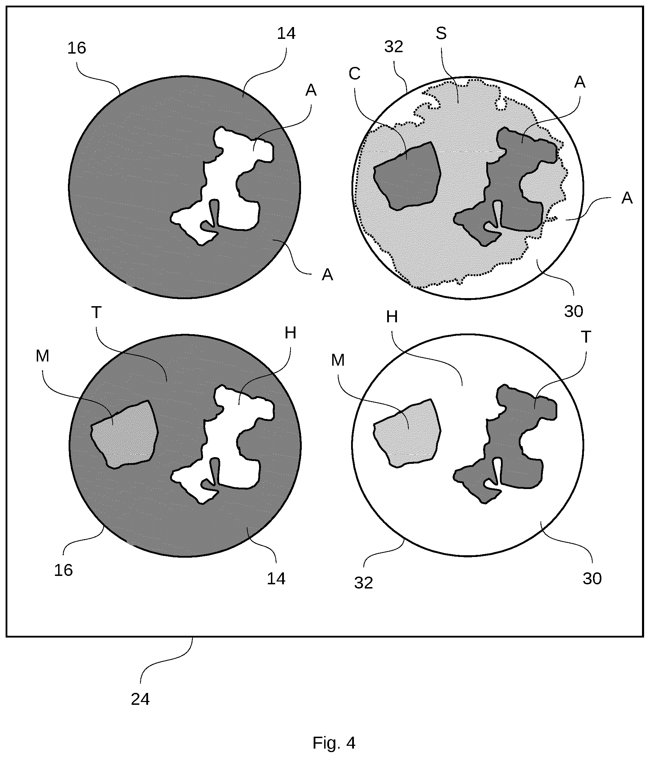

- Fig. 4: eine schematische Ansicht einer Anzeigeeinrichtung mit Anzeige von mittels der Messeinrichtung bereitgestellter sensorischer Informationen.

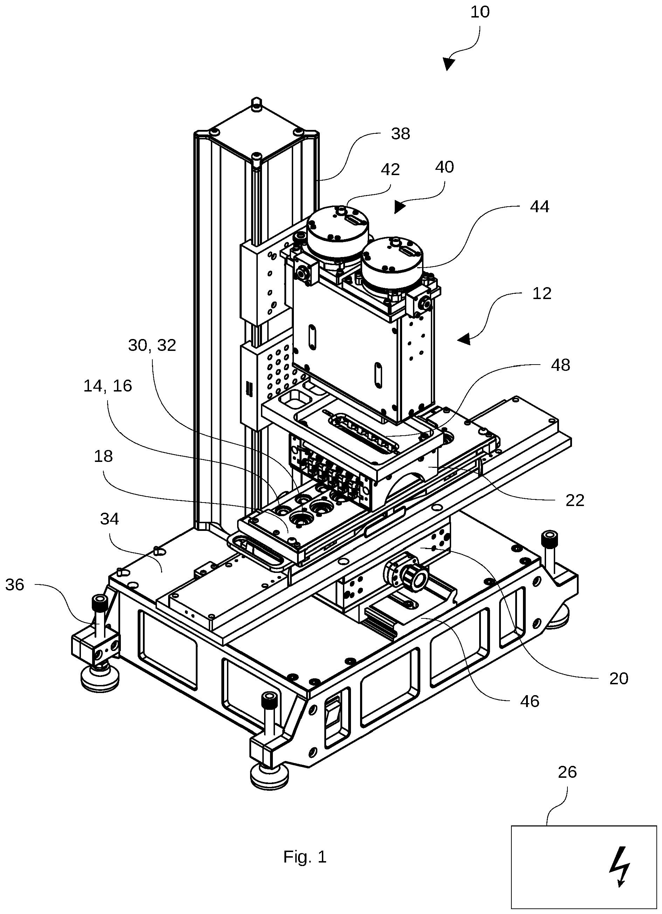

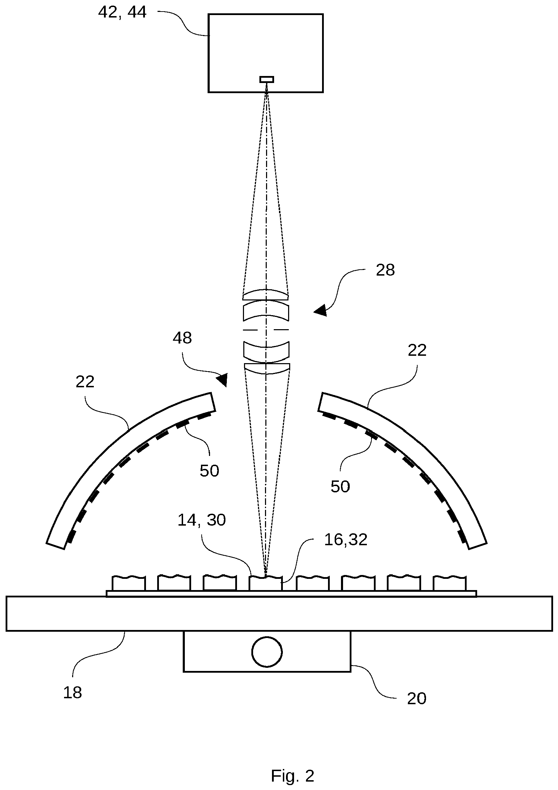

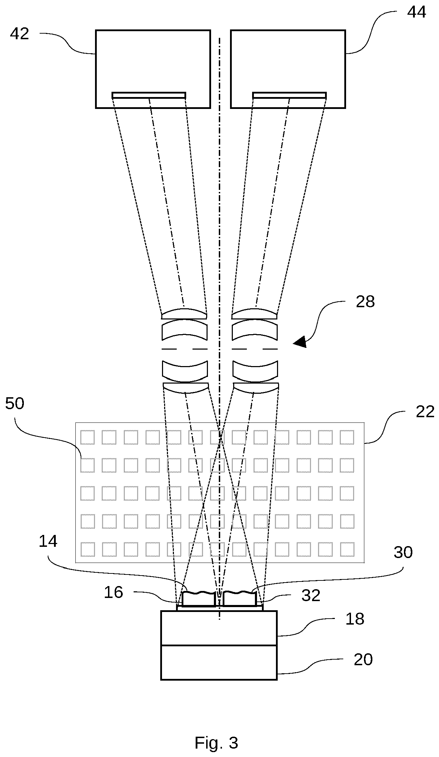

Figur 1 zeigt schematisiert einen Aufbau eines Analysesystems 10. Das Analysesystem 10 umfasst eine Messeinrichtung 12 mit einer Bildaufnahmeeinrichtung 40. Die Bildaufnahmeeinrichtung 40 ist im gezeigten Beispiel als Stereokamerasystem mit zwei Kameras 42, 44 ausgebildet. In einem Gehäuse der Messeinrichtung 12 ist - wie in den Fig. 2 und 3 schematisch näher gezeigt - ein Objektiv 28 angeordnet. Unterhalb der Kameras 42, 44 ist eine etwa tunnelartig ausgestaltete Beleuchtungseinrichtung 22 zur Beleuchtung von Bruchpartnern 16, 32 und den Bruchflächen 14, 30 der Bruchpartner 16, 32 angeordnet.

Unterhalb der Beleuchtungseinrichtung 22 ist ein Probenhalter 18 angeordnet, der im gezeigten Beispiel mehrere Paare von Bruchpartnern 16, 32 trägt. Eine erste Bruchfläche 14 eines ersten Bruchpartners 16 und eine korrespondierende Bruchfläche 16 eines zweiten Bruchpartners 32 können von der oberhalb des Probenhalters 18 angeordneten Beleuchtungseinrichtung 22 beleuchtet werden. Dafür kann der Probenhalter 18 relativ gegenüber der Beleuchtungseinrichtung 22 verschiebbar angeordnet sein.

Die Beleuchtungseinrichtung 22 weist einen im gezeigten Beispiel an ihrer Oberseite einen langlochartigen Durchgang 48 auf, der eine optische Erfassung der Bruchflächen 14, 30 der Bruchpartner 16, 32 mittels der oberhalb der Beleuchtungseinrichtung 22 angeordneten Kameras 42, 44 erlaubt.

Der Probenhalter 18 ist im gezeigten Beispiel an einer Stelleinrichtung 20 gelagert mittels der der Probenhalter 18 in seiner Position relativ gegenüber der Messeinrichtung 12 verstellbar ausgebildet ist. Die Stelleinrichtung 20 kann insbesondere für die Einstellung des Höhenabstands gegenüber den Kameras 42, 44 ausgebildet sein. Wie in der Figur 1 weiter angedeutet, kann der Probenhalter 18 insbesondere zusammen bzw. mittelbar über die Stelleinrichtung 20 an einer Gleitschiene 46 gelagert sein. An der Gleitschiene 46 kann der Probenhalter 18 bzw. die den Probenhalter 18 tragende Stelleinrichtung 20 lateral gegenüber des Messeinrichtung 12 verschiebbar ausgebildet sein.

Im gezeigten Beispiel der Figur 1 ist die Messeinrichtung 12 und die Beleuchtungseinrichtung 22 an einer Befestigungssäule 38 angeordnet. Die Messeinrichtung 12 und die Beleuchtungseinrichtung 22 können insbesondere in Längsrichtung der Befestigungssäule 38 verschiebbar und/oder in einer gewünschten Position an der Befestigungssäule 38 befestigbar gelagert sein. Die Befestigungssäule 38 ist auf einer Trageplattform 34 angeordnet. Die Trageplattform 34 kann - wie im Beispiel der Figur 1 gezeigt - mit höheneinstellbaren Standfüße 36 ausgestattet sein. Die Trageplattform 34 kann mittels der verstellbaren Standfüße 36 am Aufstellort nivellierbar sein.

Figur 1 zeigt des Weiteren eine Steuerungseinrichtung 26, die zur Steuerung des Analysesystems 10 dient. Die Steuerungseinrichtung 26 kann für einen Datenaustausch drahtlos oder drahtgebunden mit einzelnen Komponenten des Analysesystems 10 verbunden sein. Es kann vorgesehen sein, dass die Steuerungseinrichtung 26 - wie im Beispiel der Figur 1 angedeutet - extern zum Analysesystem 10 angeordnet ist. Alternativ kann die Steuerungseinrichtung 26 auch an dem Analysesystem 10 angeordnet sein. Insbesondere ist denkbar, dass die Steuerungseinrichtung 26 ein für die Durchführung des erfindungsgemäßen Verfahrens ausgebildeter Computer ist.

Figur 2 und Figur 3 zeigen stark schematisiert die Erfassung der Bruchflächen 14, 30 von an einem Probenhalter 18 gehaltenen Bruchpartnern 16, 32. Figur 2 zeigt die Anordnung von vom und Figur 3 zeigt die Anordnung aus Figur 2 um 90° gedreht von der Seite. Unterhalb der Kameras 42, 44 ist ein Objektiv 28 angeordnet. Unterhalb des Objektivs 28 zeigen die Figuren 2 und 3 eine etwa tunnelartig ausgebildete Beleuchtungseinrichtung 28. Wie die Figuren 2 und 3 weiter andeuten, sind die Bruchpartner 16, 32 auf einem Probenhalter 18 angeordnet. Der Probenhalter 18 ist auf einer Stelleinrichtung 20 angeordnet mittels der der Probenhalter 18 gegenüber dem Objektiv 28 bzw. gegenüber der Kameras 42, 44 verstellbar ist.

Die Beleuchtungseinrichtung 22 ist hier mit zwei etwa kreisbogenartig geformten Flügeln ausgestaltet, wobei jeder Flügel jeweils mehrere Leuchtmittel 50 aufweist. Die Leuchtmittel 50 können in mehreren Leuchtmittelgruppen organisiert sein, beispielsweise zeilenweise oder spaltenweise. Denkbar ist auch, dass die Leuchtmittel 50 jeweils eines Flügels jeweils einer Leuchtmittelgruppe zugeordnet sind.

Im gezeigten Beispiel werden die Bruchflächen 14, 30 mittels der zwei Kameras 42, 44 optisch erfasst. Wie gestrichelt angedeutet, passiert der Strahlengang der Kameras 42, 44 das Objektiv 28 und fällt durch einen langlochartigen Durchgang 48 der Beleuchtungseinrichtung 22, bevor er auf die Bruchflächen 14, 30 trifft.

Figur 3 zeigt stark schematisiert eine Anzeigeeinrichtung 24 zur visuellen Anzeige von mittels der Messeinrichtung 12 bereitgestellter sensorischer Informationen. Auf der Anzeigeeinrichtung 24 sind im gezeigten Beispiel vier Abbildungen von Bruchflächen 14, 30 zweier korrespondierender Bruchpartner 16, 32 gezeigt. In der oberen Zeile sind Bildinformationen, insbesondere Fotografien, der Bruchflächen 14, 30 gezeigt, während in der unteren Zeile Höheninformationen der Bruchflächen 14, 30 visuell dargestellt sind. Wie sich aus der schematischen Darstellung bereits ergibt, können einige Bruchflächenbereiche erst in der Zusammenschau von Bild- und Höheninformationen erkannt bzw. unterschieden werden.

Im oberen linken Bild wird gezeigt, wie sich das Bruchbild bei einem matt-schwarzen Klebstoff darstellt. Die Bildinformationen in der oberen Zeile lassen für den Betrachter in der Bruchfläche 14 am ersten Bruchpartner 16 (linkes Bild) lediglich einen Adhäsionsbruch (AF) A erkennen. Das Bild des korrespondierenden zweiten Bruchpartners 32 lässt den Betrachter hingegen bereits erkennen, dass in der Bruchfläche 14 auch ein fügeteilnaher Kohäsionsbruch (SCF) S und ein Kohäsionsbruch (CF) C vorliegen muss.

Im der Bildinformation des ersten Bruchpartners 16 sind also kohäsives Versagen (CF) C und oberflächennahes Versagen (SCF) S adhäsives Versagen (AF) A nicht unterscheidbar. Nur das adhäsives Versagen A am ersten Bruchpartner 16 ist visuell erkennbar. Im oberen rechten Bild ist zwar das oberflächennahe Versagen S unterscheidbar zum adhäsiven Versagen A am zweiten Bruchpartner 33, jedoch nicht eindeutig zum kohäsiven Versagen C und adhäsiven Versagen A am ersten Bruchpartner 16. Die beiden letztgenannten wirken visuell gleich.

Durch den Vergleich mit der Höheninformation (zweite Zeile) ist alles eindeutig zuordenbar, da zusätzlich zu den Höheninformationen der Substratoberflächen die Höheninformation für das kohäsive Versagen hinzukommt. Eine verlässliche Kategorisierung der Merkmale der Bruchflächen 14, 30 wird erst dadurch möglich, dass die Bilder beider Bruchpartner plus die jeweiligen Höheninformationen vorliegen. Bei der Ausführung des erfindungsgemäßen Verfahrens werden die in der Zusammenschau der der Bilder erkennbaren Konturen bzw. Flächenbereiche der Bruchflächen markiert und einer bestimmten Bruchklassifikation zugeordnet.

Die untere Zeile zeigt im rechten Bild des ersten Bruchpartners 16 eine Höheninformation mittlerer Referenz M, die ein kohäsives Versagen C in den Bruchflächen 14, 30 der Bruchpartner 16, 32 signalisiert. Grundsätzlich kann zwischen Höheninformationen mittlerer Referenz M, tiefer Referenz T und hoher Referenz H unterschieden werden. Im linken und rechten Bild ist die Höheninformation mittlerer Referenz M jeweils an gleicher Stelle, da die Schichtdicke der Bruchflächen 14, 30 für das kohäsive Versagen C in beiden Bruchpartnern 16, 32 jeweils etwa gleich ist. Die Höheninformationen tiefer Referenz T und hoher Referenz H sind im linken und rechten Bild jeweils umgekehrt, da die Schichtdicken der Bruchflächen 14, 30 jeweils umgekehrt stark sind.

### BEZUGSZEICHENLISTE

| | | | |
|---|---|---|---|
| 10 | Analysesystem | 50 | Leuchtmittel |
| 12 | Messeinrichtung | | |
| 14 | Erste Bruchfläche | A | Adhäsionsbruch (AF) |
| 16 | Erster Bruchpartner | S | Fügeteilnaher Kohäsionsbruch (SCF) |
| 18 | Probenhalter | C | Kohäsionsbruch (CF) |
| 20 | Stelleinrichtung | | |
| 22 | Beleuchtungseinrichtung | H | Höheninformation hoher Referenz |
| 24 | Anzeigeeinrichtung | M | Höheninformation mittlerer Referenz |
| 26 | Steuerungseinrichtung | T | Höheninformation tiefer Referenz |
| 28 | Objektiv | | |
| 30 | Zweite Bruchfläche | | |
| 32 | Zweiter Bruchpartner | | |
| 34 | Trageplattform | | |
| 36 | Höheneinstellbare Standfüße | | |
| 38 | Befestigungssäule | | |
| 40 | Bildaufnahmeeinrichtung | | |
| 42 | Kamera | | |
| 44 | Kamera | | |
| 46 | Gleitschiene | | |
| 48 | Durchgang | | |

## Patentansprüche

1. Verfahren zur Auswertung von Bruchflächen zweier Bruchpartner mit den Schritten:
Bereitstellen eines Analysesystems (10), umfassend
eine Messeinrichtung (12), aufweisend eine Bildaufnahmeeinrichtung (40) mit einem insbesondere hinsichtlich optischer Schärfe einstellbaren Objektiv (28) zum sensorischen Erfassen einer ersten Bruchfläche (14) eines ersten Bruchpartners (16) und einer zugehörigen zweiten Bruchfläche (30) eines zweiten Bruchpartners (32), wobei die Messeinrichtung (12) ausgebildet und eingerichtet ist zum Bereitstellen sensorischer Informationen der erfassten Bruchflächen (14, 30), und wobei das sensorische Erfassen mindestens ein optisches Erfassen mittels einer Bildaufnahme und die sensorischen Informationen mindestens optische Informationen umfassen,
einen Probenhalter (18) zum Halten des ersten und/oder zweiten Bruchpartners (16, 32),
eine Beleuchtungseinrichtung (22) zur Beleuchtung der mit der Messeinrichtung (12) zu erfassenden ersten und/oder zweiten Bruchfläche (14, 30),
eine Anzeigeeinrichtung (24) zur visuellen Anzeige von mittels der Messeinrichtung (12) bereitgestellter sensorischer Informationen,
Anordnen des ersten und/oder zweiten Bruchpartners (16, 32) an dem Probenhalter (16),
Durchführen einer optischen Erfassung der ersten und/oder zweiten Bruchfläche (14, 30) des ersten und/oder zweiten Bruchpartners (16, 32) mittels der Messeinrichtung (12),
Anzeigen von mittels der Messeinrichtung (12) bereitgestellter Informationen der erfassten ersten und/oder zweiten Bruchfläche (14, 30) als ein oder mehrere für einen Benutzer auswertbare Bilder mittels der Anzeigeeinrichtung (24),
Auswerten der sensorischen Informationen der erfassten ersten und zweiten Bruchfläche (14, 30), wobei das Auswerten der sensorischen Informationen den Schritt umfasst:
Identifizieren von zwischen der ersten und der zweiten Bruchfläche (14, 30) korrespondierender Bereiche.

2. Verfahren nach Anspruch 1, **dadurch gekennzeichnet, dass** das Verfahren den Schritt umfasst:
Durchführen eines Prüfablaufs, wobei der Prüfablauf folgende Schritte umfasst:
Erfassen einer Helligkeit und/oder einer Schärfe in den mittels der Messeinrichtung (12) bereitgestellten optischen Informationen und Auswerten der erfassten Helligkeit und/oder Schärfe,
Verändern von Parametern der Beleuchtungseinrichtung (22) bei Feststellen und in Abhängigkeit einer Abweichung der erfassten Helligkeit von einer vorgebbaren Helligkeit und/oder Verändern von Parametern der Messeinrichtung (12) in Abhängigkeit einer Abweichung der erfassten Schärfe von einer vorgebbaren Schärfe, und
vorzugsweise Wiederholen des Prüfablaufs bis die Abweichung von erfasster Helligkeit und/oder Schärfe gegenüber einer vorgebbaren Helligkeit und/oder Schärfe innerhalb eines vorgebbaren Schwellwertintervalls liegt.

3. Verfahren nach einem der vorangegangenen Ansprüche, **dadurch gekennzeichnet, dass** eine Messeinrichtung (12) verwendet wird, die Höheninformationen erfasst.

4. Verfahren nach einem der vorangegangenen Ansprüche, **dadurch gekennzeichnet, dass** das Analysesystem (10) eine Stelleinrichtung (20) zum Einstellen der Ausrichtung des ersten und/oder zweiten Bruchpartners (16, 32) relativ zur Messeinrichtung (12) umfasst, und wobei das Verfahren den Schritt umfasst: Ausrichten des ersten und/oder zweiten Bruchpartners (16, 32) relativ zur Messeinrichtung (12) mittels der Stelleinrichtung (20).

5. Verfahren nach einem der vorangegangenen Ansprüche, **dadurch gekennzeichnet, dass** die Bildaufnahmeeinrichtung (40) ausgebildet und eingerichtet ist zur Aufnahme eines oder mehrerer Bilder der ersten und/oder zweiten Bruchfläche (14, 30).

6. Verfahren nach einem der vorangegangenen Ansprüche, **dadurch gekennzeichnet, dass** eine Bildaufnahmeeinrichtung (40) verwendet wird, die mindestens eine Zeilenbildkamera (42, 44) umfasst.

7. Verfahren nach einem der vorangegangenen Ansprüche, **dadurch gekennzeichnet, dass** eine Bildaufnahmeeinrichtung (40) verwendet wird, die eine Stereokamera (42, 44) umfasst, wobei die Stereokamera (42, 44) ausgebildet und eingerichtet ist, zwei Bilder jeweils einer Bruchfläche (14, 30) mit unterschiedlichen Betrachtungswinkeln aufzunehmen.

8. Verfahren nach einem der vorangegangenen Ansprüche, **dadurch gekennzeichnet, dass** eine Beleuchtungseinrichtung (22) verwendet wird, die mindestens eine und bevorzugt mindestens zwei Leuchtmittelgruppen umfasst, wobei jede Leuchtmittelgruppe jeweils mindestens ein einstellbares Leuchtmittel (50) umfasst, und wobei die Beleuchtungseinrichtung (22) derart eingerichtet und ausgestaltet ist, dass die Leuchtmittel (52) individuell und/oder gruppenweise hinsichtlich Helligkeit einstellbar sind.

9. Verfahren nach einem der vorangegangenen Ansprüche, **dadurch gekennzeichnet, dass** eine Beleuchtungseinrichtung (22) verwendet wird, bei der Leuchtmittel (50) in der Art einer etwa sphärisch geformten Kuppel oder eines langgestreckten Tunnels in Bezug auf die mit der Messeinrichtung (12) jeweils optisch zu erfassenden Bruchflächen (14, 30) angeordnet sind.

10. Verfahren nach einem der vorangegangenen Ansprüche, **dadurch gekennzeichnet, dass** eine Beleuchtungseinrichtung (22) verwendet wird, die eine Diffusoreinrichtung aufweist, wobei die Diffusoreinrichtung derart zwischen Leuchtmitteln (50) und der mit der Beleuchtungseinrichtung (22) beleuchteten ersten und/oder zweiten Bruchfläche (14, 30) angeordnet ist, dass das Licht dieser Leuchtmittel (50) zur Beleuchtung der ersten und/oder zweiten Bruchfläche (14, 30) nicht gerichtet sondern gestreut ist.

11. Verfahren nach einem der vorangegangenen Ansprüche, **dadurch gekennzeichnet, dass** eine Stelleinrichtung (20) verwendet wird, die derart ausgebildet und eingerichtet ist, dass eine Einstellung der Position des Probenhalters (18) gegenüber der Messeinrichtung (12) in drei Raumrichtungen (X, Y, Z) ermöglicht ist, wobei die Einstellung der Position des Probenhalters in mindestens eine Raumrichtung in einer Schrittweite von 0,5 µm bis 0,05 µm, vorzugsweise in einer Schritt weite von 0,1 µm ermöglicht ist, und wobei die Stelleinrichtung (20) vorzugsweise einen motorisierten Antrieb aufweist.

12. Verfahren nach einem der vorangegangenen Ansprüche, **dadurch gekennzeichnet, dass** eine Stelleinrichtung (20) verwendet wird, die derart eingerichtet und ausgebildet ist, dass die mit der Messeinrichtung (12) zu erfassenden Bruchpartner (16, 32) bei einer relativen Veränderung der Position des Probenhalters (18) mittels der Stelleinrichtung (20) in eine erste Raumrichtung, insbesondere in Z-Richtung, über eine Distanz von 1 cm eine Abweichung gegenüber ihrer Startposition bezüglich der zwei übrigen Raumrichtungen, insbesondere bezüglich der X- und Y-Richtungen, von weniger als 20 µm aufweisen.

13. Verfahren nach einem der vorangegangenen Ansprüche, **dadurch gekennzeichnet, dass** das Auswerten unter Einsatz eines selbstlernenden Algorithmus erfolgt, insbesondere eines Random Forrest Algorithmus.

14. Verfahren nach Anspruch 13, **dadurch gekennzeichnet, dass** das Auswerten der sensorischen Informationen den Schritt aufweist: Identifizieren und Markieren von Bereichen in den sensorischen Informationen, wobei die Bereiche nach vorgebbaren Kriterien identifiziert werden und wobei vorzugsweise die identifizierten und markierten Bereiche verwendet werden, um den Algorithmus zu trainieren.

15. Verfahren nach einem der vorangegangenen Ansprüche, **dadurch gekennzeichnet, dass** das Identifizieren von zwischen der ersten und der zweiten Bruchfläche (14, 30) korrespondierender Bereiche den Schritt aufweist: Auswerten von in den sensorischen Informationen enthaltenen Höheninformationen der erfassten Bruchflächen (14, 30) und Zuordnen von Höhenbereichen der ersten Bruchfläche (14) zu korrelierenden Höhenbereichen der zweiten Bruchfläche (30).

16. Verfahren nach einem der vorangegangenen Ansprüche, **dadurch gekennzeichnet, dass** das Verfahren den Schritt aufweist: Ausrichten der auf der Anzeigeeinrichtung (24) angezeigten Bilder anhand von zwischen der ersten und der zweiten Bruchfläche (14, 30) korrespondierenden Bereichen, insbesondere anhand korrespondierender Höhenbereiche.

17. Verfahren nach einem der vorangegangenen Ansprüche, **dadurch gekennzeichnet, dass** das Auswerten der optischen Informationen den Schritt aufweist: Bewerten von Flächen zuvor identifizierter Bereiche in den sensorischen Informationen hinsichtlich ihres Flächenanteils relativ zur Gesamtfläche der ersten und/oder zweiten Bruchfläche (14, 30).

18. Steuerungseinrichtung (26), die ausgebildet und eingerichtet ist zur Steuerung eines Verfahrens nach einem der vorangegangenen Ansprüche.

19. Analysesystem zur Auswertung von Bruchflächen, das ausgebildet und eingerichtet ist, ein Verfahren nach einem der Ansprüche 1 bis 17 auszuführen, wobei das Analysesystem die Vorrichtungsmerkmale eines oder mehrerer der vorangegangen Ansprüche umfasst.
